# EUROPEAN PATENT APPLICATION

(11) **EP 1 568 513 A2**
(43) Date of publication of application: **31.08.2005**
(21) Application number: 05002183.1
(22) Date of filing: 02.02.2005
(51) Int. Cl.: B60C 9/22, B60C 9/00, B60C 9/20

(54) **Passenger vehicle radial tire**

(30) Priority: 27.02.2004 JP 2004054609
(71) Applicant: SUMITOMO RUBBER INDUSTRIES LIMITED, Hyogo-ken (JP)
(72) Inventor: Yamazaki, Kazumi, Chuo-ku Kobe-shi Hyogo-ken (JP)
(74) Representative: Manitz, Finsterwald & Partner GbR

(57) **Abstract**

A passenger vehicle radial tire 1 includes a band layer 9 comprising a band ply A around which a band cord is spirally wound radially outside of a belt layer 7. The band cord comprises a nylon fiber cord of a single-stranded structure in which conditioned mass fineness (D) (moisture percentage 4.5%) is 1400 to 2800 dtex and elongation percentage of cord when 44N load is applied is 4.0 to 6.0%. The belt layer 7 comprises a belt ply in which steel belt cord is arranged at an angle of 10 to 40° with respect to a circumferential direction of the tire, and bending stiffness per one belt cord is set to 50 gf•cm or less.

## Description

### BACKGROUND OF THE INVENTION

### Field of the Invention

The present invention relates to a pneumatic tire in which road noise is reduced while securing excellent high speed resistance.

### Prior Art

Generally, in a passenger vehicle radial tire, in order to suppress the lifting (lifting caused by a centrifugal force) of a tread portion at the time of high speed running and to enhance the high speed resistance, a band layer comprising a band ply is provided on an outer side of a belt layer. The band ply is obtained by spirally winding a band cord.

It is found that if such a band layer is provided, road noise around a frequency of 250 Hz is reduced, and that if modulus of the band cord is increased, the binding force to the belt layer is enhanced, and the road noise can be reduced. Thereupon, in recent years, it is proposed to use high modulus fiber such as aromatic polyamide fiber, polyethylene terephthalate fiber and polyethylene naphthalate fiber instead of conventional nylon fiber, as the band cord.

However, since this kind of high modulus fiber cord does not have functional group as polymer characteristics, it is difficult to secure adhesive ability with respect to rubber. For this reason, a single bathing process in which compound of epoxy, isocyanate and urea is added to normal RFL liquid, or a double bathing process in which a second bathing using RFL liquid is carried out after a first bathing using the compound of epoxy, isocyanate and urea is carried out. However, the adhesive ability with respect to rubber is not sufficient, the cord is petrified due to the compound of epoxy, isocyanate and urea, fatigue resistance is deteriorated and these processes count against the high speed resistance. Since the cord is petrified, the tire becomes prone to receive vibration input from a road surface, and there is a problem that the original road noise reducing effect of the cord can not be exhibited sufficiently.

### SUMMARY OF THE INVENTION

It is an object of the present invention to provide a passenger vehicle radial tire in which a binding force toward a belt layer can be enhanced while suppressing the vibration input from a road surface to a low level without deteriorating the adhesive ability with respect to rubber in a band cord and the fatigue resistance, and road noise can be reduced while securing excellent high speed resistance, and riding comfort can be enhanced.

According to claim 1 of this application, there is provided with a pneumatic radial tire comprising a belt layer disposed inside of a tread portion and radially outside of a carcass, and a band layer disposed radially outside of the belt layer, wherein
the band layer comprises a band ply of band cord spirally wound at an angle of 5° or less with respect to a circumferential direction of the tire, the band cord comprises a nylon fiber cord in which conditioned mass fineness(D) (moisture percentage 4.5%) is 1400 to 2800dtex, a single-stranded structure is employed and elongation percentage of cord when 44N load is applied is 4.0 to 6.0%,
the belt layer comprises a belt ply of steel belt cords arranged at an angle of 10 to 40° with respect to a circumferential direction of the tire, and bending stiffness per one belt cord is set to 50 gf•cm or less.

Since the present invention has the above-described structure, a binding force toward a belt layer can be enhanced while suppressing the vibration input from a road surface to a low level without deteriorating the adhesive ability with respect to rubber in a band cord and the fatigue resistance. As a result, road noise can be reduced while securing excellent high speed resistance, and further riding comfort can be enhanced.

### BRIEF DESCRIPTION OF THE DRAWINGS

Fig. 1 is a sectional view showing an embodiment of a pneumatic tire of the present invention;
Fig. 2 is a diagram for explaining a measuring method of bending stiffness of a belt cord; and
Fig. 3 is a sectional view for explaining rubber thicknesses L1 and L2 between belt cords.

### DETAILED DESCRIPTION OF THE PREFERRED EMBODIMENTS

An embodiment of the present invention will be explained below with reference to the drawings.

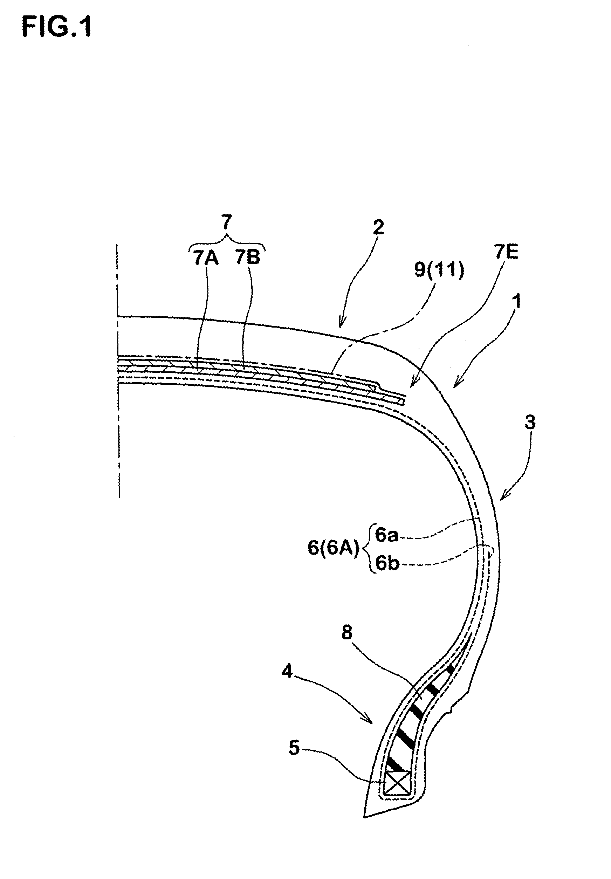

As shown in Fig. 1, a passenger vehicle radial tire 1 includes a carcass 6 extending from a tread portion 2 to a bead core 5 of a bead portion 4 through a sidewall portion 3, a belt layer 7 disposed inside of the tread portion 2 and radially outside of the carcass 6, and a band layer 9 disposed further outside of the belt layer 7.

The carcass 6 is formed of one or more, one carcass ply 6A in this embodiment in which a carcass cord is arranged, for example, at an angle of 75 to 90° with respect to a circumferential direction of the tire. The carcass ply 6A includes a ply body 6a extending between the bead cores 5 and 5, and a ply turnup portion 6b which is turned up from axially inside to outside of the tire around the bead core 5. A bead-reinforcing bead apex rubber 8 extending from the bead core 5 radially outward is disposed between the ply body 6a and the ply turnup portion 6b. An organic fiber cord such as nylon, polyester and rayon is suitably employed as the carcass cord.

The belt layer 7 is formed of one or more, two belt plies 7A and 7B in this embodiment in which steel belt cords are arranged at an angle of 10 to 40° with respect to the circumferential direction of the tire. The belt cords intersect with each other between the belt plies 7A and 7B, thereby enhancing the rigidity of the belt, and reinforcing the tread portion 2 with hoop effect.

Next, the band layer 9 is formed of one or more band plies 11 around which a band cord is spirally wound at an angle of 5° or less with respect to the circumferential direction of the tire. Examples of the band ply 11 are a pair of left and right edge band plies which cover only both ends 7E of the belt layer 7 in an axial direction of the tire, and a full band ply which covers substantially entire width of the belt layer 7, and a combination of the edge band ply and full band ply. In this embodiment, the band layer 9 comprises one full band ply 11.

Here, it is found that in the band layer 9, if the modulus of the band cord is enhanced and the binding force toward the belt layer 7 is increased, the high speed resistance is enhanced and further road noise especially around a frequency of 250Hz is reduced. Thereupon, in recent years, it is proposed to use a cord of high modulus fiber such as aromatic polyamide fiber, polyethylene terephthalate fiber and polyethylene naphthalate fiber. However, the high modulus fiber can not exhibit sufficient adhesion with respect to rubber even if compound of epoxy, isocyanate and urea are used as adhesive. Further, the cord is petrified by the adhesive, the fatigue resistance is deteriorated, and the high speed resistance is lowered. Further, since the cord is petrified, there is a tendency that the original road noise reducing effect of the cord can not be exhibited sufficiently.

In the present invention, a nylon fiber cord having a conditioned mass fineness (D) (moisture percentage 4.5%) of 1400 to 2800 dtex in which a single-stranded structure is employed as the band cord is used. In the single-stranded structure, a ran of strands which are arranged in parallel is stranded in one direction, and the stranding degree is extremely low as compared with a conventional folded stranded structure. Therefore, even if nylon fiber is used, the tensile elastic modulus as a cord can largely be enhanced, and it is possible to exhibit a binding force as high as the high modulus fiber cord having the folded stranded structure.

If stranding coefficient T (= N•√D) of the band cord is reduced in a range of 400 to 700 and if the elongation percentage of the cord when a load of 44N is applied is suppressed to 6.0% or less, the excellent binding force can sufficiently be exhibited. The term "stranding coefficient T" means a value (= N×√D) obtained by multiplying a square root √D of the conditioned mass fineness (D) (moisture percentage 4.5%) by the number N of strandings of cord per 10 cm. The term "cord elongation" means elongation percentage under a constant load (44N) as measured in accordance with a test carried out at the time of standard condition of "elongation percentage when a constant load is applied" described in paragraph 8.7 of JIS L1017.

If the elongation percentage of the cord when the load of 44N is applied is less than 4.0%, this is advantageous in terms of binding force, but the elongation of cord is excessively small, and the elongation can not follow the movement of the tire. Further, the band cord can not expand sufficiently when the tire is vulcanized and molded, the tire deformation is induced and uniformity of the tire is deteriorated. Therefore, it is preferable that the elongation percentage of the cord is in a range of 4.0 to 6.0%. If the stranding coefficient T exceeds 700, the stranding becomes excessively large, the cord becomes prone to be expanded and it becomes difficult to obtain sufficient binding force. If the stranding coefficient T is smaller than 400, the stranding becomes excessively small, the strands can not be meshed easily, and it becomes troublesome to form the cord or handle the cord. Therefore, the stranding coefficient T should be in the range of 400 to 700.

Since nylon is employed as the band cord, like the one in which rayon is employed, strong adhesive with respect to rubber can be secured by normal dip treatment using RFL liquid. Therefore, it is unnecessary to use the compound of epoxy, isocyanate and urea and abuse caused by using such element can be prevented. It is possible to prevent fatigue resistance caused when a cord is petrified is prevented from being deteriorated, and to prevent the vibration input from a road surface caused when a cord is petrified is prevented from being accepted easily, and it becomes possible to effectively exhibit excellent high speed resistance and to reduce road noise.

Since the binding force is increased, the band layer 9 also has an effect to enhance the steering stability. Contrary, the increased steering stability can be used for reducing the rigidity of the belt, and a cord softer than the conventional cord can be used as the belt cord while maintaining the steering stability.

In the present invention, in order to further reduce the road noise, the bending stiffness per one belt cord (steel cord) is limited to 50 gf·cm or lower, and the belt rigidity is set lower as compared with the conventional tire. This can make it more difficult to receive the vibration input from a road surface while maintaining the steering stability. The bending stiffness can easily be limited not only by changing the material of the cord, but also by reducing a diameter of the cord. When the diameter of the cord is reduced, the tire weight can be reduced, and rolling resistance can also be reduced.

When the bending stiffness is greater than 50 gf•cm, the road noise can not further be reduced. Further, the binding force is increased by the band layer 9, the tire becomes excessively hard, vibration is generated at the time of running, and therefore the riding comfort is deteriorated. If the bending stiffness is less than 3 gf•cm, the tire becomes excessively soft, convergence of vibration is deteriorated, and swing is generated and the riding comfort is deteriorated. Therefore, the lower limit value of the bending stiffness is preferably 3 gf•cm or higher, more preferably 10 gf•cm or higher. The upper limit value of the bending stiffness is 40 gf·cm or less, and more preferably 35 gf·cm or less.

In the belt cord, it is preferable that the compressive stiffness per one cord is limited to 500 to 2400 N/mm. If the compressive stiffness is less than 500 N/mm, the tire is excessively soft, the convergence of vibration is deteriorated, and the road noise can not be reduced. If the compressive stiffness exceeds 2400 N/mm on the contrary, the tire becomes excessively hard, stiff feeling is generated. Thus, the lower limit value of the compressive stiffness is 700 N/mm or higher, and preferably 800 N/mm or higher. The upper limit value of the compressive stiffness is 2000 N/mm or less, and more preferably 1800 N/mm or less.

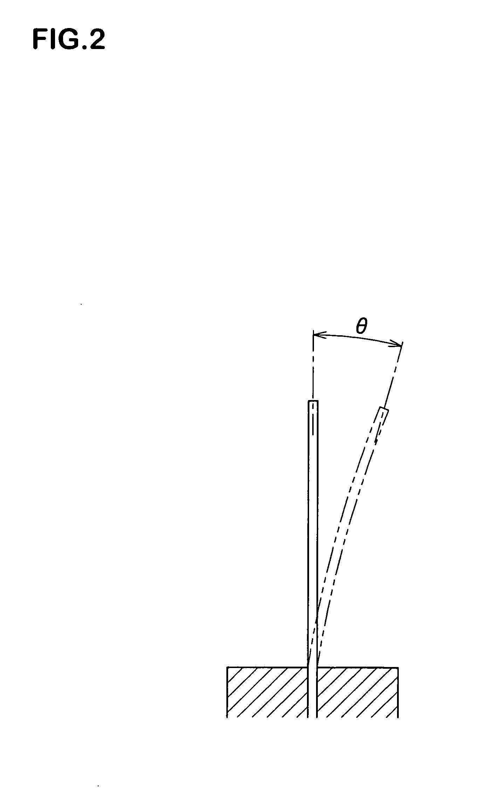

The "bending stiffness" is defined as a bending moment value (gf•m) when a force is added to a tip end of a cord which extends from a fixed end by 5 cm, and the opening angle θ of the tip end becomes 15° using a V-5 rigidity tester 150-D produced by TABER (U.S.) as shown in Fig. 2. Columnar rubbers each having a diameter of 25 mm and a height of 25 mm were formed, one belt cord having a length of 25 mm was embedded into one of the columnar rubber in the height direction as a sample having a cord, and the other columnar rubber had no cord (sample having no cord). Both the samples were compressed in the height direction by 1 mm using a tensile tester, and a compression force required at that time was measured. The compression force of the sample having no cord was subtracted from the compression force of the sample having the cord, and a result thereof was defined as the "compressive stiffness".

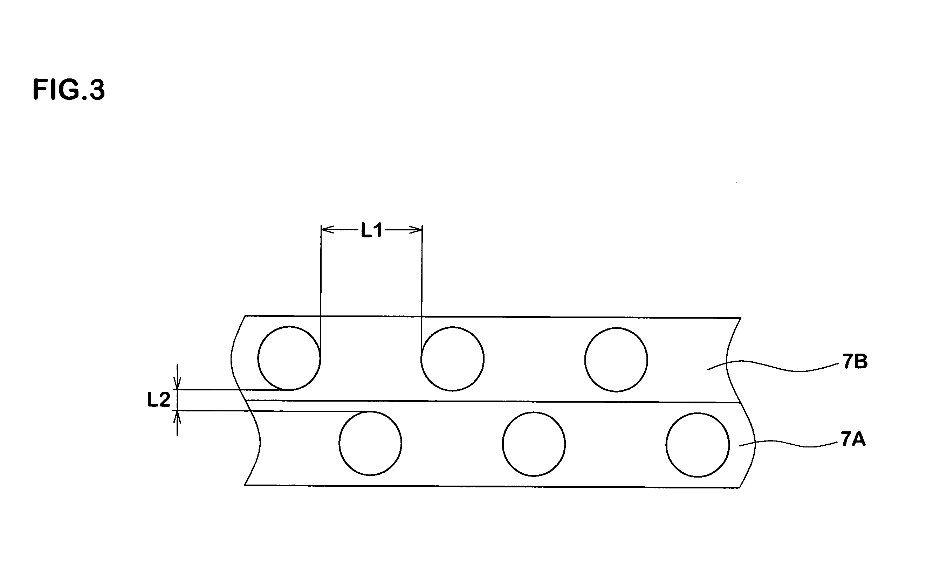

As shown in Fig. 3 in the enlarged manner, in the tire 1, in order to enhance the riding comfort, it is preferable that a rubber thickness L1 between adjacent belt cords in the belt plies 7A and 7B is set greater than 0.5 mm and smaller than 1.0 mm, and a rubber thickness L2 between adjacent belt cords in the belt plies 7A and 7B in the thickness direction is set greater than 0.2 mm and smaller than 0.4 mm.

This is because that if the rubber thickness L1 between the cords is 0.5 mm or less and the rubber thickness L2 between the cords is 0.2 mm or less, although the bending stiffness of the belt cord is low, the stiff feeling is generated at the time of running and the riding comfort is deteriorated. If the rubber thickness L1 between the cords is as narrow as 0.5 mm or less, the cord density becomes excessively large, a cord loose is prone to be generated at the ply end, the tire weight is increased more than necessary, and rolling resistance is deteriorated. If the rubber thickness L2 between the cords is 0.2 mm or less, peeling-off is prone to be generated between the plies.

If the rubber thickness L1 between the cords is 1.0 mm or more and the rubber thickness L2 between the cords is 0.4 mm or more, the tire becomes excessively soft, the swinging feeling is generated at the time of running, and the response of tire is deteriorated, the riding comfort and rolling resistance are deteriorated.

Although the especially preferable embodiment has been described in detail, the present invention is not limited to the illustrated embodiment, and the invention can variously be modified and carried out.

### Examples

Tires having the structure shown in Fig. 1 and a tire size of 195/65R15 were prototyped based on the specification shown in Table 1, and road noise, rolling resistance, riding comfort and tire weight of the tires were evaluated. Specification of carcass, belt layer and band layer which are not shown in Table 1 are same as follows.
- Carcass
   The number of plies: two
   Cord: 1100 dtex/2(PET)
   Cord angle: +88°/-88°
   Cord count: 50/5 cm
- Belt layer
   The number of plies: two
   Cord angle: +20°/-20°
- Band layer
   The number of plies: one (full band)
   Cord count: 50/5 cm

### (1) Road noise:

The sample tires were mounted on all wheels of a passenger vehicle (2000cc, FF vehicle) having rims (15×6JJ) with internal pressure (200 kPa), and the vehicle was allowed to run on a test course at speed of 60 km/h. Noise at an ear at a driver's seat was measured at that time, and a sound pressure level (dB) at 250Hz was compared with a comparative example 2 as a reference. Here, a symbol + (plus) means that the road noise was increased.

### (2) Rolling resistance:

A rolling resistance tester was used, and the rolling resistance when the vehicle run under conditions of rim (15×6JJ), internal pressure (200 kPa), load (4.0 kN) and speed (80 km/h) was measured. The measured value is indicated with indices in which the comparative example 2 was indicated as 100. The smaller the index, the lower the rolling resistance is and more excellent the result is.

### (3) Riding comfort:

The vehicle used in the road noise test was allowed to run on a tire test course at speed of 60 km/h, and vibration (stiff feeling, swinging feeling) transmitted to a hand of a person sitting on a passenger seat (the hand was put on his or her knee) was evaluated on the sensory base on a scale from 1 to 5 as follows:
- point 5: vibration (stiff feeling or swinging feeling) is not transmitted at all.
- point 4: vibration (stiff feeling or swinging feeling) is slightly transmitted but is not obtrusive.
- point 3: vibration (stiff feeling or swinging feeling) is clearly transmitted and can be sensed.
- point 2: vibration (stiff feeling or swinging feeling) is clearly sensed but hand, knee and thigh are not vibrated so much.
- point 1: vibration (stiff feeling or swinging feeling) is clearly sensed and at least one of hand, knee and thigh is vibrated.

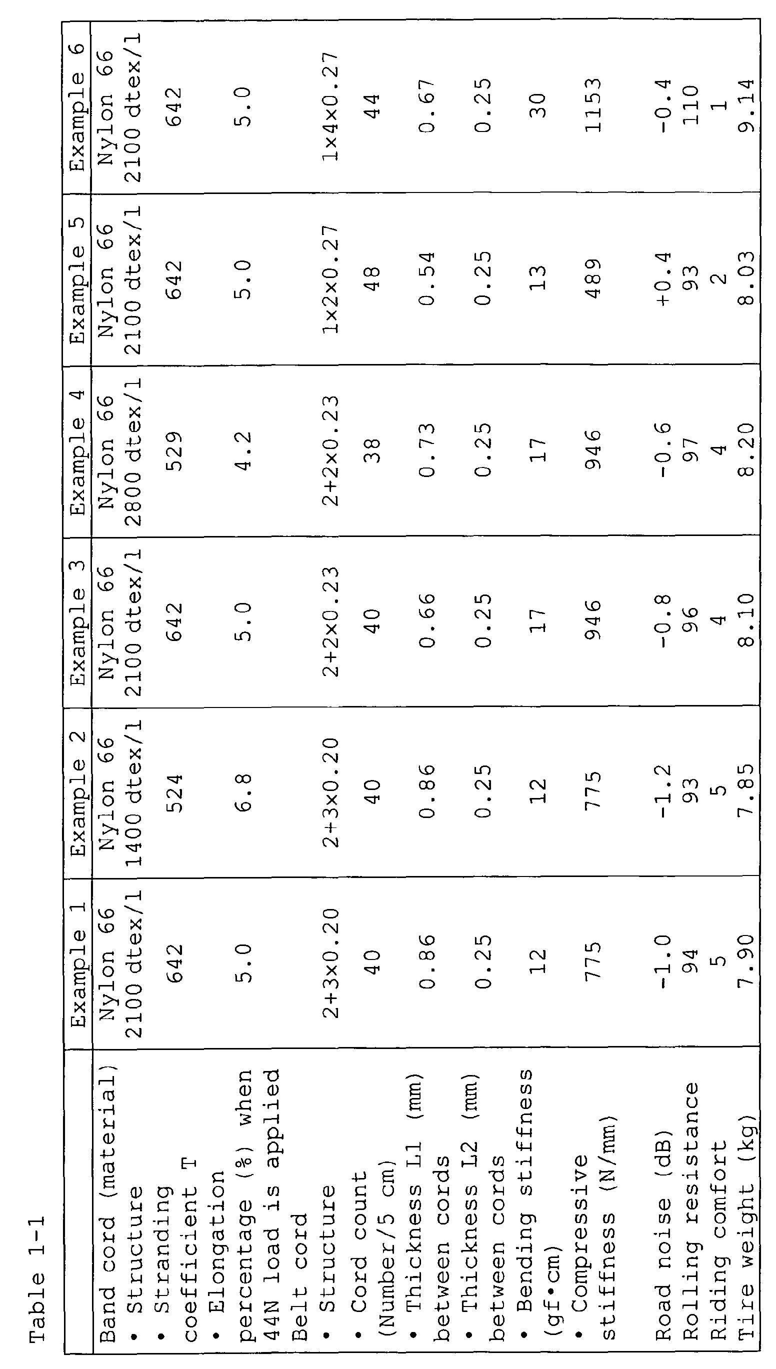

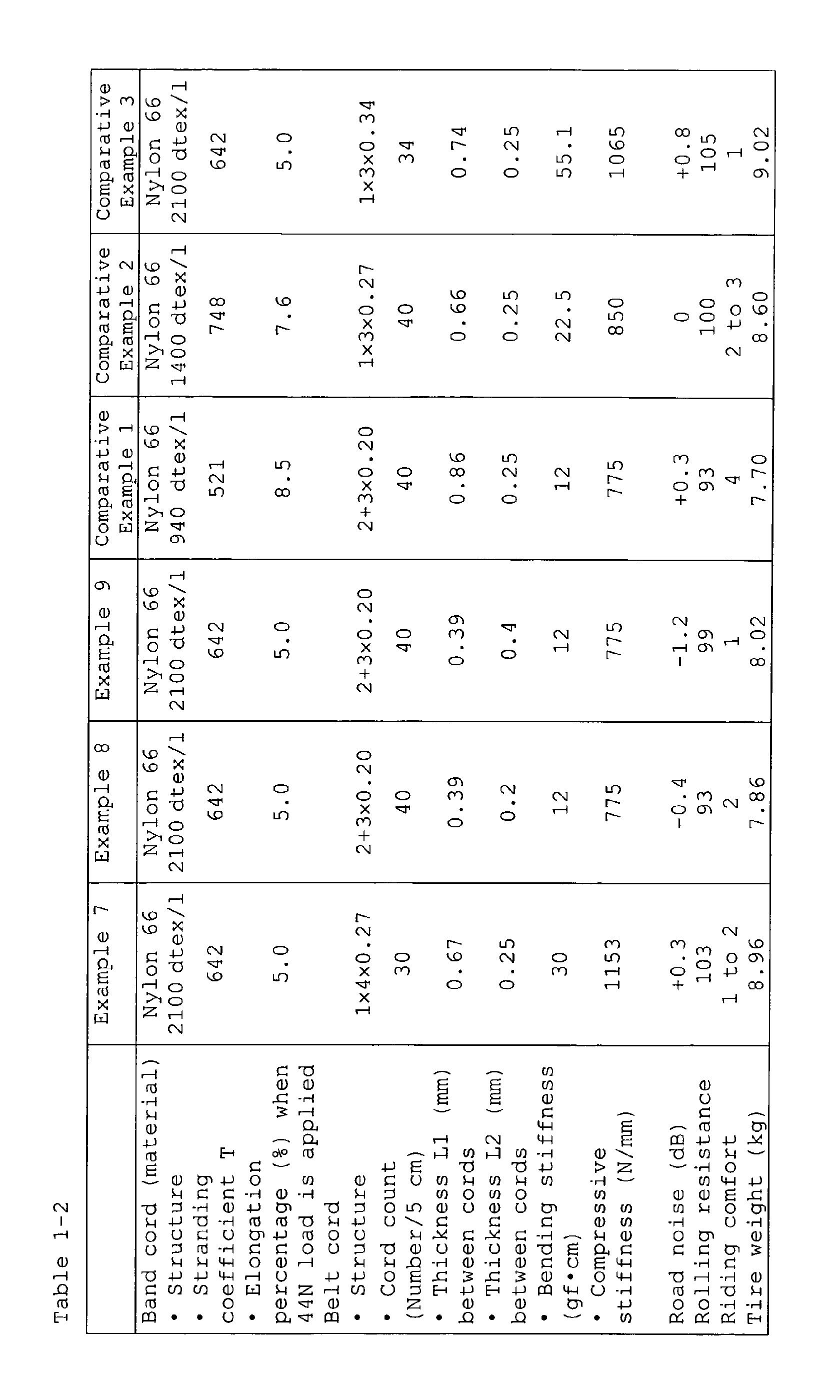

Since the comparative example 1 has thinner band cord and greater elongation percentage of the cord as compared with the comparative example 2, the binding force is inferior, and the road noise is increased. The comparative example 3 has high bending stiffness of the belt cord, the vibration input from a road surface is received easily, and the road noise is increased. In the example tire 5 of the present invention, the compressive stiffness of the belt cord is excessively small, and therefore the road noise is increased and the riding comfort is deteriorated. In the example tire 6 of the present invention, the rubber thickness L1 between cords is too narrow, and therefore the rolling resistance and the riding comfort are deteriorated. In the example tire 7 of the invention, the rubber thickness L1 between the cords is too wide, and therefore the road noise is increased, and the rolling resistance and the riding comfort are deteriorated. In the example tires 8 and 9, the rubber thickness L2 between the cords is too thin or too thick, and therefore the riding comfort is deteriorated.

## Claims

1. A passenger vehicle radial tire comprising a belt layer disposed inside of a tread portion and radially outside of a carcass, and a band layer disposed radially outside of the belt layer, wherein
the band layer comprises a band ply of band cords spirally wound at an angle of 5° or less with respect to a circumferential direction of the tire, the band cord comprises a nylon fiber cord in which conditioned mass fineness (D) (moisture percentage 4.5%) is 1400 to 2800 dtex, a single-stranded structure is employed and elongation percentage of cord when a load of 44N is applied is 4.0 to 6.0%,
the belt layer comprises a belt ply of steel belt cords arranged at an angle of 10 to 40° with respect to a circumferential direction of the tire, and bending stiffness per one belt cord is set to 50 gf**·**cm or less.

2. The passenger vehicle radial tire according to claim 1, wherein in the band cord, a stranding coefficient T (= N•√D) obtained by multiplying a square root √D of the conditioned mass fineness (D) (moisture percentage 4.5%) by the number N of strandings of cord per 10 cm is 400 to 700.

3. The passenger vehicle radial tire according to claim 1 or 2, wherein in the belt cord, compressive stiffness per one cord is 500 to 2400 N/mm.

4. The passenger vehicle radial tire according to any one of claims 1 to 3, wherein the belt layer comprises two belt plies, a rubber thickness L1 between cords which are adjacent in each belt ply is set greater than 0.5 mm and smaller than 1.0 mm, and a rubber thickness L2 between cords which are adjacent in each belt ply in a thickness direction is set greater than 0.2 mm and smaller than 0.4 mm.
